# EUROPEAN PATENT SPECIFICATION

(11) **EP 3 693 557 B1**
(45) Date of publication and mention of the grant of the patent: **26.11.2025**
(21) Application number: 20155651.1
(22) Date of filing: 05.02.2020
(51) Int. Cl.: F01D 17/08, F01D 21/00, G01M 3/00

(54) **DUCT RUPTURE DETECTION SYSTEM**
SYSTEM ZUR DETEKTION VON KANALBRÜCHEN
SYSTÈME DE DÉTECTION DE RUPTURE DE CONDUIT

(30) Priority: 05.02.2019 US 201916267924
(43) Date of publication of application: 12.08.2020
(73) Proprietor: RTX Corporation, Farmington, CT 06032 (US)
(72) Inventor: SCARBOROUGH, Nathaniel G., West Hartford, CT 06117 (US); ISLAM, Mainul M., Bolton, CT 06043 (US)
(74) Representative: Dehns

(56) References cited:
- EP-A1- 3 034 813
- EP-A2- 2 157 298
- US-A1- 2010 158 068
- US-A1- 2011 215 936
- US-A1- 2017 108 395

## Description

### FIELD

The present disclosure relates generally to gas turbine engines and, more particularly, to apparatus and methods used to detect duct ruptures within air management systems used with gas turbine engines.

### BACKGROUND

Gas turbine engines, such as those used to power modern commercial and military aircraft, typically include a fan section, a compressor section, a combustor section and a turbine section. During operation, air is pressurized in the compressor section and mixed with fuel and burned in the combustor section to generate hot combustion gases. The hot combustion gases are then communicated through the turbine section, which extracts energy from the gases to power the compressor section, the fan section and various other systems occurring within or proximate the gas turbine engine. A typical engine core flow path extends sequentially through the compressor section, the combustor section and the turbine section. A bypass flow path is typically formed between a radial inner surface of a nacelle and a radial outer surface of a core engine case that contains the core air flow extending through the various sections. A fan within the fan section drives air through the bypass flow path.

Modern aircraft typically use the core air flow to provide pressurized air to other systems or components within an air management system. For example, pressurized air bled from one or more bleed ports mounted to the core engine case proximate the compressor section may be routed via conduits or ducts to provide environmental air within the cabin of the aircraft or anti-icing air to a nose-lip section of the nacelle surrounding the core engine case and fan. Oftentimes, the pressurized air bled from the one or more bleed ports is at an elevated temperature, which may approach a fire detection threshold temperature. Accordingly, a rupture within a duct or valve in the proximity of the core engine case or within the confines of the nacelle may inadvertently trigger a fire detection system, causing a needless and potentially costly release of an extinguishment or an inflight shutdown (IFSD).

On the other hand, if the temperature of the pressurized gas is sufficiently below the fire detection threshold temperature, the ruptured duct or valve may go undetected, also leading to costly repairs to an engine or to an airframe component proximate the engine in the event a part breaks free from the engine. Further complicating matters is the presence of overpressure release mechanisms configured to exhaust the pressurized air from a ruptured duct away from the nacelle, rendering overpressure detectors ineffective. Accordingly, a temperature detection system tuned to detect a ruptured duct or valve in the proximity of a core engine case may be used to detect the rupture and also to avoid a possible false fire detection and subsequent release of extinguishment or an IFSD.

US 2010/158068 A1 discloses a bleed leakage system including an arrangement of thermostats that are capable of detecting the place where the bleed air leakage is occurring.

US 2017/108395 A1 discloses a linear-thermal-sensor testing system having a signal generator and a reflection analyzer.

US 2011/215936 A1 discloses a system including a controller configured to receive a signal from a thermal radiation sensor indicative of a temperature of a region including at least one fluid passage. The controller is also configured to detect a leak within the at least one fluid passage.

EP 3 034 813 A1 discloses an anti-icing system for an aircraft structure.

### SUMMARY

From a first aspect of the invention, a system for detecting a ruptured duct transporting a high-temperature fluid within a gas turbine engine is disclosed as claimed in claim 1.

In various embodiments, the rupture detection line includes a first section configured to detect a rupture of a first duct in the first fire zone and a second section configured to detect the rupture of a second duct in the second fire zone. In various embodiments, the rupture detection line includes a first section configured to detect a rupture of a first duct in the first fire zone and a second section configured to detect a flow of the heated fluid from the first duct into the second fire zone. In various embodiments, the first ruptured duct is one of a cooling air duct, an environmental air duct a de-icing duct and an oil duct. In various embodiments, the second ruptured duct is one of an environmental air duct and a de-icing duct.

In various embodiments, the plurality of rupture sensing elements includes a first plurality of rupture sensing elements disposed on the first section and a second plurality of rupture sensing elements disposed on the second section. In various embodiments, the first fire zone is a core compartment and the second fire zone is a pylon. In various embodiments, the first plurality of sensing elements includes a first thermistor configured to detect a first temperature and the second plurality of sensing elements includes a second thermistor configured to detect a second temperature. In various embodiments, the first temperature is characteristic of a heated gas bled from a high pressure compressor of the gas turbine engine.

From a further aspect of the invention, a gas turbine engine as claimed in claim 7 is disclosed.

In various embodiments, the first fire zone is a core compartment and the second fire zone is a pylon. In various embodiments, the rupture detection line includes a first section within the first fire zone and a second section within the second fire zone and wherein the plurality of rupture sensing elements includes a first plurality of rupture sensing elements disposed on the first section and a second plurality of rupture sensing elements disposed on the second section. In various embodiments, the first plurality of sensing elements includes a first thermistor configured to detect a first temperature and the second plurality of sensing elements includes a second thermistor configured to detect a second temperature. In various embodiments, the first temperature is characteristic of a heated gas bled from a high pressure compressor of the gas turbine engine.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a schematic view of a gas turbine engine, in accordance with various embodiments;
FIGS. 2A and 2B are schematic cross sectional and axial views of a gas turbine engine, in accordance with various embodiments;
FIGS. 3A and 3B are schematic views of a thermal detection system employing a rupture detection system, in accordance with various embodiments; and
FIG. 4 is a block diagram of an alarm system employing a rupture detection system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

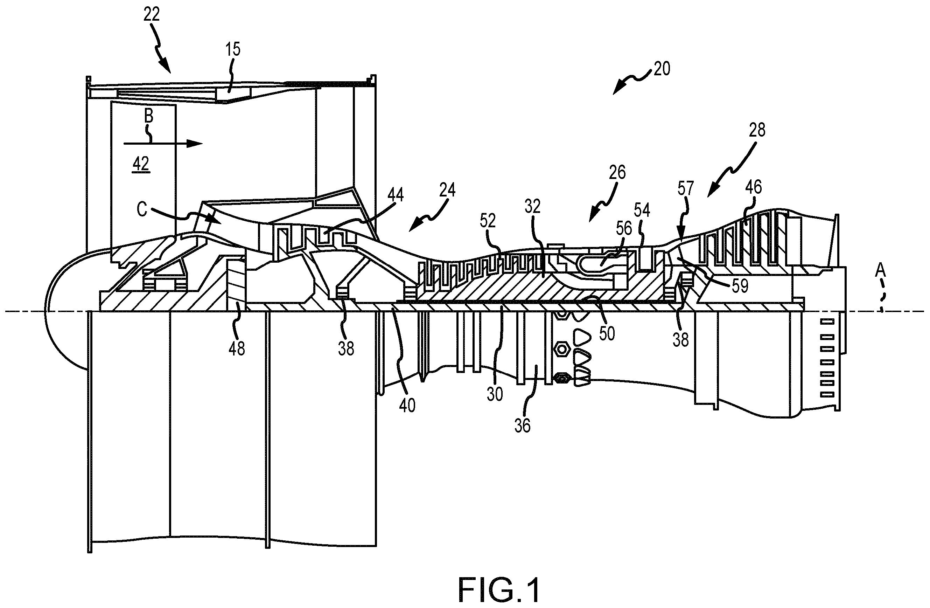

Referring now to the drawings, FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a fan case 15 of a nacelle, while the compressor section 24 drives air along a core or primary flow path C for compression and communication into the combustor section 26 and then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines.

The gas turbine engine 20 generally includes a low speed spool 30 and a high speed spool 32 mounted for rotation about an engine central longitudinal axis A relative to an engine static structure 36 via several bearing systems 38. It should be understood that various bearing systems at various locations may alternatively or additionally be provided and the location of the several bearing systems 38 may be varied as appropriate to the application. The low speed spool 30 generally includes an inner shaft 40 that interconnects a fan 42, a low pressure compressor 44 and a low pressure turbine 46. The inner shaft 40 is connected to the fan 42 through a speed change mechanism, which in this gas turbine engine 20 is illustrated as a fan drive gear system 48 configured to drive the fan 42 at a lower speed than the low speed spool 30. The high speed spool 32 includes an outer shaft 50 that interconnects a high pressure compressor 52 and a high pressure turbine 54. A combustor 56 is arranged in the gas turbine engine 20 between the high pressure compressor 52 and the high pressure turbine 54. A mid-turbine frame 57 of the engine static structure 36 is arranged generally between the high pressure turbine 54 and the low pressure turbine 46 and may include airfoils 59 in the core flow path C for guiding the flow into the low pressure turbine 46. The mid-turbine frame 57 further supports the several bearing systems 38 in the turbine section 28. The inner shaft 40 and the outer shaft 50 are concentric and rotate via the several bearing systems 38 about the engine central longitudinal axis A, which is collinear with longitudinal axes of the inner shaft 40 and the outer shaft 50.

The air in the core flow path C is compressed by the low pressure compressor 44 and then the high pressure compressor 52, mixed and burned with fuel in the combustor 56, and then expanded over the high pressure turbine 54 and low pressure turbine 46. The low pressure turbine 46 and the high pressure turbine 54 rotationally drive the respective low speed spool 30 and the high speed spool 32 in response to the expansion. It will be appreciated that each of the positions of the fan section 22, the compressor section 24, the combustor section 26, the turbine section 28, and the fan drive gear system 48 may be varied. For example, the fan drive gear system 48 may be located aft of the combustor section 26 or even aft of the turbine section 28, and the fan section 22 may be positioned forward or aft of the location of the fan drive gear system 48.

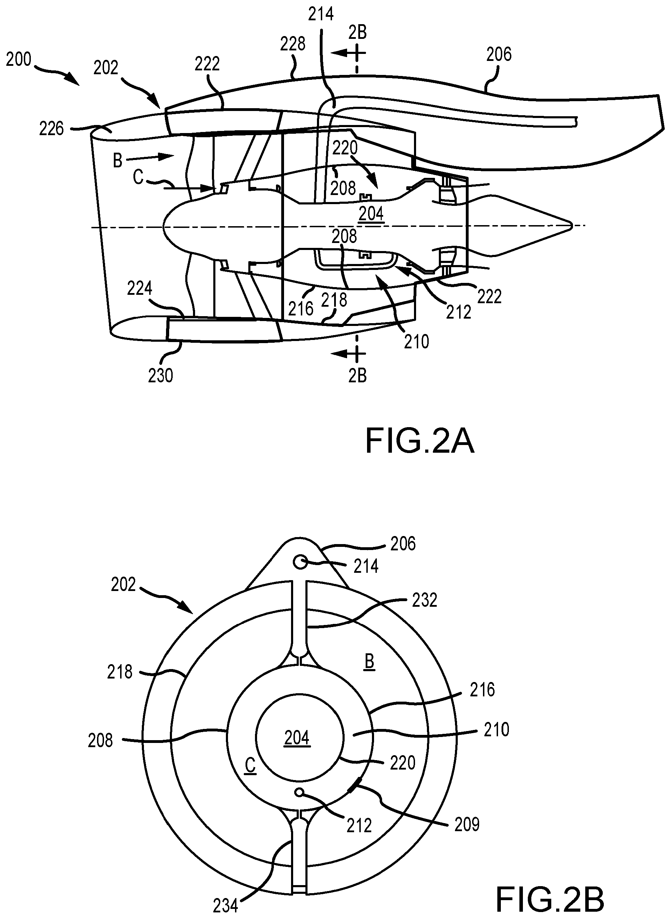

Referring now to FIGS. 2A and 2B, simplified schematic views of a gas turbine engine 200, such as, for example, the gas turbine engine 20 described above with reference to FIG. 1, are provided. In various embodiments, the gas turbine engine includes a nacelle 202 that surrounds a core engine 204 and a pylon 206 that provides a structure to secure the gas turbine engine 200 to, for example, the underside of a wing. The core engine 204 typically includes a compressor section, a combustor section and a turbine section, such as, for example, the compressor section 24, the combustor section 26 and the turbine section 28 describe above, with reference to FIG. 1. A fan duct inner structure 208 surrounds the core engine 204 and encloses a core compartment 210.

Various components may be provided in the core compartment 210, such as, for example, a cooling air duct 212, used to route pressurized air from the compressor section to the turbine section, or an environmental air duct 214, used to route pressurized air from the compressor section, through the pylon 206, and ultimately to the cabin of an aircraft. The cooling air duct 212 is under high pressure and may supply compressed air, for example, from a low pressure compressor or a high pressure compressor to a high pressure turbine for cooling. Similarly, the environmental air duct 214 is under high pressure and may supply compressed air, for example, from the compressor section of the core engine 204 to an Environmental Control System (ECS) for the aircraft. Other examples of pressurized air may be routed by conduit to a de-icing or anti-icing system (collectively referred to herein as a de-icing system including a de-icing duct for routing the pressurized air). A bypass flow path B, such as, for example, the bypass flow path B, described above with reference to FIG. 1, is defined by an inner flow surface 216 and an outer flow surface 218. A core engine casing 220 surrounds the core engine 204 and defines an outer surface of a core flow path C. Note that while the disclosure generally focuses on a heated air being transported in a conduit, the disclosure equally contemplates applicability to other fluids, such as lubrication oils routed by oil ducts. Thus, the disclosure uses the term fluid in its broadest sense to encompass gases and liquids routed through various ducts or conduits within various fire zones.

Still referring to FIGS. 2A and 2B, three fire zones are schematically illustrated. The fire zones are generally configured to limit the spread of fire throughout the nacelle 202 and pylon 206 of the gas turbine engine 200. For example, a first fire zone 222 (e.g., Zone A), encloses the core compartment 210, which encompasses a flammable fluid zone that may include various valves and ducting - e.g., the cooling air duct 212 and the environmental air duct 214 - used to deliver high-temperature, pressurized air as described above. The first fire zone 222 may be defined, in part, by the fan duct inner structure 208, which surrounds the core engine 204. A second fire zone 228 (e.g., Zone B), encloses a flammable fluid zone that extends through the pylon 206. In various embodiments, the second fire zone 228 may include ducting - e.g., the environmental air duct 214 - configured to deliver pressurized air to an ECS. A third fire zone 230 (e.g., Zone C), encloses a flammable fluid zone that extends circumferentially about a fan case 224. In various embodiments, the third fire zone 230 may include ducting configured to deliver pressurized air to a nose-lip section 226 for de-icing or anti-icing purposes. In various embodiments, a physical rupture indicator 209, such as a door configured to open due to an overpressure condition, may be disposed on or adjacent a structure surrounding a particular fire zone, such as, for example, the fan duct inner structure 208 that defines, in part, the first fire zone 222. The physical rupture indicator 209 may provide a visual indicator that a rupture has occurred within a particular fire zone.

In various embodiments, the fan duct inner structure 208 that defines Zone A may include an upper bifurcation 232 and a lower bifurcation 234, each of which extend in a generally radial direction within the bypass flow path B and are configured to accommodate wires, conduits, engine mountings or other components. In various embodiments, the upper bifurcation 232 and the lower bifurcation 234 are configured to carry conduits transporting pressurized air or flammable fluids from one fire zone to another. For example, in various embodiments, the upper bifurcation 232 may be configured to route conduits - e.g., the environmental air duct 214 - from positions within the first fire zone 222 (e.g., Zone A) to positions within the second fire zone (e.g., Zone B). The upper bifurcation 232 and the lower bifurcation 234 also facilitate opening of the nacelle 202 to access the core engine 204 or the various systems housed within the nacelle 202. In various embodiments, fire seals may also be positioned between the fire zones to hinder the spread of fire or the leaking of pressurized or flammable fluids from a ruptured duct from one zone to another.

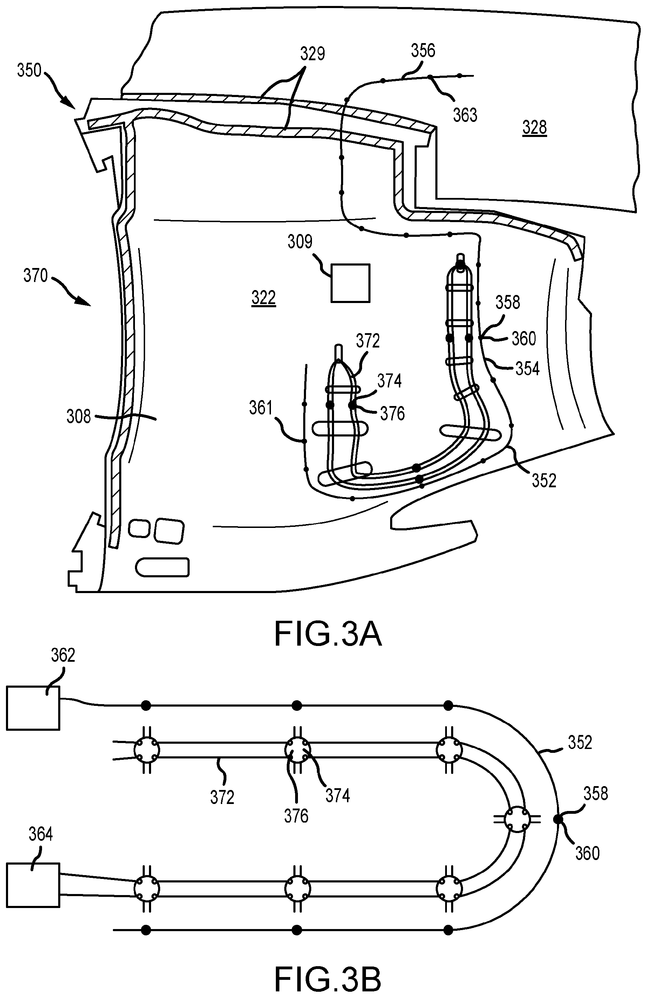

Referring now to FIGS. 3A and 3B, a rupture detection system 350 is illustrated, in accordance with various embodiments. The rupture detection system 350 is configured to detect a rupture in a duct or conduit transporting a pressurized, high temperature fluid. In various embodiments, the rupture detection system 350 may include a rupture detection line 352 configured to extend within one or more fire zones, such as, for example, one or more of Zones A, B and C described above with reference to FIGS. 2A and 2B. For example, in various embodiments, the rupture detection line 352 may include a first section 354 that extends within a first fire zone 322 and a second section 356 that extends within a second fire zone 328. The first fire zone 322 and the second fire zone 328 may, in various embodiments, be considered the first fire zone 222 and the second fire zone 228, respectively, described above with reference to FIGS. 2A and 2B. In various embodiments, the rupture detection line 352 may include one or more rupture sensing elements 358 (or a plurality of rupture sensing elements), such as, for example, a thermistor 360 (or a rupture sensing element), which may comprise a resistor that exhibits a substantial reduction in electrical resistance in the presence of heating. A firewall structure 329 may also be employed to isolate the various fire zones, such as, for example, the first fire zone 322 and the second fire zone 328. In addition, similar to the physical rupture indicator 209 described above with reference to FIG. 2B, a physical rupture indicator 309, such as a door configured to open due to an overpressure condition, may be disposed on or adjacent the fan duct inner structure 308 that defines, in part, the first fire zone 322.

In various embodiments, the one or more rupture sensing elements 358 may be disposed throughout an applicable fire zone and mounted to appropriate structure. For example, the one or more rupture sensing elements 358 may be disposed throughout the first fire zone 322 and mounted to a fan duct inner structure 308, such as, for example, the fan duct inner structure 208 described above with reference to FIGS. 2A and 2B. The one or more rupture sensing elements 358 may, in addition to the foregoing or alternatively, be mounted to componentry or other surfaces proximate to or positioned radially outside of the fan duct inner structure 308, such as, for example, componentry of a thrust reverser or any surface defining the bypass flow path. In various embodiments, the one or more rupture sensing elements 358 may also be mounted proximate conduits or ducts within a fire zone that may be subject to rupture, such as, for example, the cooling air duct 212 and the environmental air duct 214 described above. Further, in various embodiments, the one or more rupture sensing elements 358 disposed within a particular fire zone - e.g., the first fire zone 322 or the second fire zone 328 - may possess thermal properties that exhibit a substantial reduction in electrical resistance at a temperature characteristic of a particular fluid that is transported in a duct or conduit in the particular fire zone. For example, a first thermistor 361 (or first rupture sensing element) located in the first fire zone 322 may be configured to detect temperatures characteristic of the air being transported in the cooling air duct 212, while a second thermistor 363 (or second rupture sensing element) may be configured to detect temperatures characteristic of the air being transported in the environmental air duct 214.

In various embodiments, the rupture detection system 350 may be a component within a thermal detection system 370, which compliments the rupture detection system 350 and includes separate lines dedicated to fire detection. For example, in various embodiments, the thermal detection system 370 may include a fire detection line 372. Spaced along the fire detection line 372 is one or more fire sensing elements 374, which may comprise a thermistor 376 (or a fire sensing element), similar to the thermistor 360 described above, but having different thermal properties. For example, the thermistor 360 coupled to the rupture detection line 352 may possess thermal properties that exhibit a substantial reduction in electrical resistance at a heated gas temperature characteristic of a ruptured duct (e.g., ≈ 1,000 °F or 537 °C), while the thermistor 376 coupled to the fire detection line 372 may possess thermal properties that exhibit a reduction in electrical resistance at a fire temperature characteristic of a fire (e.g., ≈ 2,000 °F or 1,093 °C).

In various embodiments, the rupture detection line 352 is connected to a rupture detection processor 362. The rupture detection processor 362 may comprise a full authority digital engine control (FADEC) system or an electronic engine control (EEC) system. Similarly, in various embodiments, the fire detection line 372 is connected to a fire detection processor 364. The fire detection processor 364 may be a part of or incorporated within the rupture detection processor 362 or it may comprise a second processor, separate and apart from the rupture detection processor 362. For example, in various embodiments, the rupture detection processor 362 may be a component of a gas turbine engine, while the fire detection processor 364 may be a component of the airframe upon which the gas turbine engine is mounted. Employing separate processors facilitates the rupture detection system 350 to be incorporated into a previously existing fire detection system, having a capability to detect fire within a nacelle structure of a gas turbine engine but no capability to detect hot gases being expelled from a ruptured duct that often times exhibit a characteristic temperature less than the characteristic temperature of a fire.

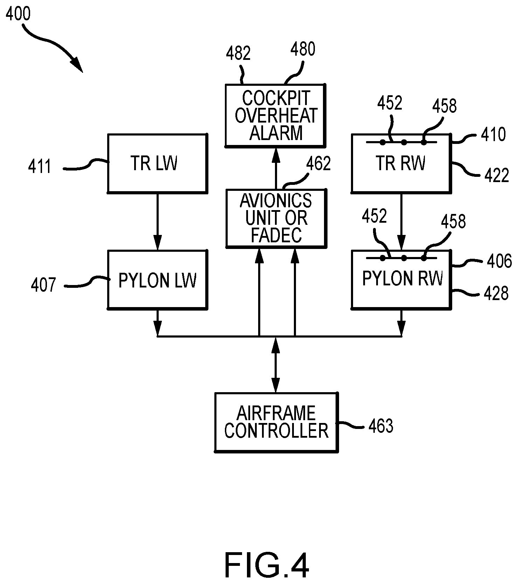

Referring now to FIG. 4, an alarm system 400 employing a rupture detection system, such as, for example, the rupture detection system 350 described above with reference to FIGS. 3A and 3B, is illustrated. In various embodiments, one or more rupture sensing elements 458, such as, for example, the one or more rupture sensing elements 358 described above with reference to FIGS. 3A and 3B, are distributed throughout a first fire zone 422 and a second fire zone 428, which may, respectively, comprise a core compartment 410 located adjacent a thrust reverser (TR) on a gas turbine engine and a pylon 406 used to attach the gas turbine engine on a right wing (RW). The first fire zone 422 and the second fire zone 428, and the core compartment 410 and the pylon 406, are similar to the first fire zone 222 and the second fire zone 228, and the core compartment 210 and the pylon 206, described above with reference to FIGS. 2A and 2B. The one or more rupture sensing elements 458 are distributed about the first fire zone 422 and the second fire zone 428 on a rupture detection line 452, similar to the rupture detection line 352 described above with reference to FIGS. 3A and 3B. A similar configuration is employed for a gas turbine engine attached to a left wing (LW), the gas turbine engine also comprising a core compartment 411 located adjacent a thrust reverser (TR) and being attached to the left wing by a pylon 407.

A rupture detection processor 462, similar to the rupture detection processor 362 described above with reference to FIGS. 3A and 3B, is configured to monitor the one or more rupture sensing elements 458. In various embodiments, the rupture detection processor 462 periodically queries whether a ruptured duct situation has occurred in the first fire zone 422. In various embodiments, the queries are accomplished by comparing a measured electrical resistance of the one or more rupture sensing elements against a threshold electrical resistance. In the event the measured electrical resistance drops below the threshold electrical resistance, a ruptured duct situation may have occurred. In such event, a first zone rupture alarm signal - e.g., a first light or illuminator 480 - is provided to the cockpit and activated to alert the cockpit crew. In the event an actual fire occurs in the first fire zone 422, an override signal may be employed to prevent the rupture alarm signal from activating.

The rupture detection processor 462 is also configured to monitor the one or more rupture sensing elements 458 disposed in the second fire zone 428. In the event a ruptured duct situation occurs within the first fire zone 422 (e.g., the core compartment 410), the heated and pressurized air may breach a fire seal disposed between the two fire zones, thereby facilitating, in various embodiments, the heated and pressurized air to flow into the second fire zone 428 (e.g., the pylon 406). In such event, a second zone rupture alarm signal - e.g., a second light or illuminator 482 - is provided to the cockpit and activated to alert the cockpit crew. In the event that one or both of the first fire zone 422 and the second fire zone 428 indicate a ruptured duct situation, appropriate action may be taken, including shutting down the engine or throttling back the speed of the engine to idle. In various situations, such action may avoid inadvertent or unnecessary release of extinguishment and the associated expenses involved therewith. An airframe controller 463, separate from the rupture detection processor 462, is configured to monitor the one or more rupture sensing elements 458 disposed in the second fire zone 428. As such, rupture detection within an engine is monitored by an engine controller (or first processor) and rupture detection within a pylon is monitored by an airframe controller.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system for detecting a ruptured duct transporting a high-temperature fluid within an aircraft having a gas turbine engine (200) and a pylon (206; 406), comprising:
a rupture detection line (352; 452) having a first section (354) and a second section (356), the first section (354) configured to extend within a first fire zone (222; 322) of the gas turbine engine (200) and the second section (356) configured to extend into a second fire zone (228; 328) of the pylon (206; 406);
a plurality of rupture sensing elements in electrical communication with and disposed along the rupture detection line (352; 452), the plurality of rupture sensing elements configured to detect a presence of a heated fluid having a heated fluid temperature less than a fire temperature, wherein the plurality of rupture sensing elements includes one or more first rupture sensing elements (358) disposed on the first section (354) and wherein the plurality of rupture sensing elements includes one or more second rupture sensing elements (363) disposed on the second section (356); and
a rupture detection processor (362; 462), configured to monitor the one or more first rupture sensing elements (358); and
an airframe controller (463), separate from the rupture detection processor (362; 462), configured to monitor the one or more second rupture sensing elements (363) within the second fire zone (228; 328).

2. The system of claim 1, wherein the first section (354) is configured to detect a rupture of a first duct (212) in the first fire zone (222; 322) and the second section (356) is configured to detect the rupture of a second duct (214) in the second fire zone (228; 328).

3. The system of claim 2, wherein the first duct (212) is at least one of a cooling air duct, an environmental air duct, a de-icing duct and an oil duct.

4. The system of claim 2 or 3, wherein the second duct (214) is at least one of an environmental air duct and a de-icing duct.

5. The system of any preceding claim, wherein the first section (354) is configured to detect a rupture of a first duct (212) in the first fire zone (222; 322) and the second section (356) is configured to detect a flow of the heated fluid from the first duct (212) into the second fire zone (228; 328).

6. The system of claim 5, wherein the first duct (212) is one of a cooling air duct and an environmental air duct.

7. A gas turbine engine (200), comprising:
a compressor section (24);
a duct (212) configured to bleed air from the compressor section (24), the duct (212) having at least a portion disposed within a first fire zone (222; 322) of the gas turbine engine (200); and
a system as claimed in claim 1,
wherein the one or more first rupture sensing elements are configured to detect a presence of a heated fluid escaping from the duct (212), the heated fluid having a heated fluid temperature less than a fire temperature.

8. The system of any of claims 1 to 6 or the gas turbine engine (200) of claim 7, wherein the first fire zone (222; 322) is a core compartment (210) and the second fire zone (228; 328) is a pylon (206; 406).

9. The system of any of claims 1 to 6 or 8, or gas turbine engine (200) of claim 7 or 8, wherein the one or more first rupture sensing elements (358) include a first thermistor configured to detect a first temperature and the one or more second rupture sensing elements (363) include a second thermistor configured to detect a second temperature.

10. The system or gas turbine engine (200) of claim 9, wherein the first temperature is characteristic of a heated gas bled from a high pressure compressor of the gas turbine engine (200).

## Patentansprüche

1. System zum Detektieren eines gerissenen Kanals, der ein Hochtemperaturfluid innerhalb eines Luftfahrzeugs mit einem Gasturbinentriebwerk (200) und einem Pylon (206; 406) transportiert, umfassend:
eine Bruchdetektionsleitung (352; 452) mit einem ersten Abschnitt (354) und einem zweiten Abschnitt (356), wobei der erste Abschnitt (354) konfiguriert ist, um sich innerhalb einer ersten Brandzone (222; 322) des Gasturbinentriebwerks (200) zu erstrecken, und der zweite Abschnitt (356) konfiguriert ist, um sich in eine zweite Brandzone (228; 328) des Pylons (206; 406) zu erstrecken;
eine Vielzahl von Bruchsensor-Elementen in elektrischer Kommunikation mit und angeordnet entlang der Bruchdetektionsleitung (352; 452), wobei die Vielzahl von Bruchsensor-Elementen konfiguriert ist, um das Vorhandensein eines erhitzten Fluids mit einer Temperatur des erhitzten Fluids zu detektieren, die geringer als eine Brandtemperatur ist, wobei die Vielzahl von Bruchsensor-Elementen ein oder mehrere erste Bruchsensor-Elemente (358) umfasst, die auf dem ersten Abschnitt (354) angeordnet sind, und wobei die Vielzahl von Bruchsensor-Elementen ein oder mehrere zweite Bruchsensor-Elemente (363) umfasst, die auf dem zweiten Abschnitt (356) angeordnet sind; und
einen Bruchdetektionsprozessor (362; 462), der konfiguriert ist, um das eine oder die mehreren ersten Bruchsensor-Elemente (358) zu überwachen; und
eine Flugwerksteuerung (463), die vom Bruchdetektionsprozessor (362; 462) getrennt ist und konfiguriert ist, um das eine oder die mehreren zweiten Bruchsensor-Elemente (363) innerhalb der zweiten Brandzone (228; 328) zu überwachen.

2. System nach Anspruch 1, wobei der erste Abschnitt (354) konfiguriert ist, um einen Bruch eines ersten Kanals (212) in der ersten Brandzone (222; 322) zu detektieren, und der zweite Abschnitt (356) konfiguriert ist, um den Bruch eines zweiten Kanals (214) in der zweiten Brandzone (228; 328) zu detektieren.

3. System nach Anspruch 2, wobei der erste Kanal (212) wenigstens einer von einem Kühlluftkanal, einem Umgebungsluftkanal, einem Enteisungskanal und einem Ölkanal ist.

4. System nach Anspruch 2 oder 3, wobei der zweite Kanal (214) wenigstens einer von einem Umgebungsluftkanal und einem Enteisungskanal ist.

5. System nach einem der vorhergehenden Ansprüche, wobei der erste Abschnitt (354) konfiguriert ist, um einen Bruch eines ersten Kanals (212) in der ersten Brandzone (222; 322) zu detektieren, und der zweite Abschnitt (356) konfiguriert ist, um einen Fluss des erhitzten Fluids vom ersten Kanal (212) in die zweite Brandzone (228; 328) zu detektieren.

6. System nach Anspruch 5, wobei der erste Kanal (212) einer von einem Kühlluftkanal und einem Umgebungsluftkanal ist.

7. Gasturbinentriebwerk (200), umfassend:
einen Verdichterabschnitt (24);
einen Kanal (212), der konfiguriert ist, um Luft aus dem Verdichterabschnitt (24) abzuzapfen, wobei der Kanal (212) wenigstens einen Abschnitt aufweist, der innerhalb einer ersten Brandzone (222; 322) des Gasturbinentriebwerks (200) angeordnet ist; und
ein System nach Anspruch 1,
wobei das eine oder die mehreren ersten Bruchsensor-Elemente konfiguriert sind, um das Vorhandensein eines aus dem Kanal (212) entweichenden erhitzten Fluids zu detektieren, wobei das erhitzte Fluid eine Temperatur des erhitzten Fluids aufweist, die geringer als eine Brandtemperatur ist.

8. System nach einem der Ansprüche 1 bis 6 oder Gasturbinentriebwerk (200) nach Anspruch 7, wobei die erste Brandzone (222; 322) ein Kerntriebwerksabteil (210) ist und die zweite Brandzone (228; 328) ein Pylon (206; 406) ist.

9. System nach einem der Ansprüche 1 bis 6 oder 8, oder Gasturbinentriebwerk (200) nach Anspruch 7 oder 8, wobei das eine oder die mehreren ersten Bruchsensor-Elemente (358) einen ersten Thermistor beinhalten, der konfiguriert ist, um eine erste Temperatur zu detektieren, und das eine oder die mehreren zweiten Bruchsensor-Elemente (363) einen zweiten Thermistor beinhalten, der konfiguriert ist, um eine zweite Temperatur zu detektieren.

10. System oder Gasturbinentriebwerk (200) nach Anspruch 9, wobei die erste Temperatur charakteristisch für ein erhitztes Gas ist, das von einem Hochdruckverdichter des Gasturbinentriebwerks (200) abgezapft wird.

## Revendications

1. Système de détection d'une rupture de conduit transportant un fluide à haute pression dans un aéronef comportant un moteur à turbine à gaz (200) et un pylône (206 ; 406), comprenant :
une conduite de détection de rupture (352 ; 452) comportant une première section (354) et une seconde section (356), la première section (354) étant configurée pour se prolonger à l'intérieur d'une première zone d'incendie (222 ; 322) du moteur à turbine à gaz (200), et la seconde section (356) étant configurée pour se prolonger dans une seconde zone de feu (228 ; 328) du pylône (206 ; 406) ;
une pluralité d'éléments de détection de rupture en communication électrique avec et disposée le long de la conduite de détection de rupture (352 ; 452), la pluralité d'éléments de détection de rupture étant configurée pour détecter la présence d'un fluide chauffé ayant une température de fluide chauffé inférieure à une température d'incendie, dans lequel la pluralité d'éléments de détection de rupture inclut un ou plusieurs premiers éléments de détection de rupture (358) disposés sur la première section (354), et dans lequel la pluralité d'éléments de détection de rupture inclut un ou plusieurs seconds éléments de détection de rupture (363) disposés sur la seconde section (356) ; et
un processeur de détection de rupture (362 ; 462), configuré pour surveiller l'un ou plusieurs premiers éléments de détection de rupture (358) ; et
un contrôleur de cellule (463), séparé du processeur de détection de rupture (362 ; 462), configuré pour surveiller l'un ou plusieurs seconds éléments de détection de rupture (363) à l'intérieur de la seconde zone d'incendie (228 ; 328).

2. Système selon la revendication 1, dans lequel la première section (354) est configurée pour détecter une rupture d'un premier conduit (212) dans la première zone d'incendie (222 ; 322) et la seconde section (356) est configurée pour détecter la rupture d'un second conduit (214) dans la seconde zone d'incendie (228 ; 328).

3. Système selon la revendication 2, dans lequel le premier conduit (212) est au moins l'un d'un conduit d'air de refroidissement, d'un conduit d'air environnemental, d'un conduit de dégivrage et d'un conduit d'huile.

4. Système selon la revendication 2 ou 3, dans lequel le second conduit (214) est au moins l'un d'un conduit d'air environnemental et d'un conduit de dégivrage.

5. Système selon une quelconque revendication précédente, dans lequel la première section (354) est configurée pour détecter une rupture d'un premier conduit (212) dans la première zone d'incendie (222 ; 322) et la seconde section (356) est configurée pour détecter un débit du fluide chauffé dans le premier conduit (212) dans la seconde zone d'incendie (228 ; 328).

6. Système selon la revendication 5, dans lequel le premier conduit (212) est un d'un conduit d'air de refroidissement et d'un conduit d'air environnemental.

7. Moteur à turbine à gaz (200) comprenant :
une section de compresseur (24) ;
un conduit (212) configuré pour purger l'air de la section de compresseur (24), le conduit (212) comportant au moins une partie disposée à l'intérieur d'une première zone d'incendie (222 ; 322) du moteur à turbine à gaz (200) ; et
un système selon la revendication 1,
dans lequel l'un ou plusieurs premiers éléments de détection de rupture sont configurés pour détecter la présence d'un fluide chauffé s'échappant du conduit (212), le fluide chauffé ayant une température de fluide chauffé inférieure à une température d'incendie.

8. Système selon l'une quelconque des revendications 1 à 6 ou moteur à turbine à gaz (200) selon la revendication 7, dans lequel la première zone d'incendie (222 ; 322) est un compartiment central (210) et la seconde zone d'incendie (228 ; 328) est un pylône (206 ; 406).

9. Système selon l'une quelconque des revendications 1 à 6 ou 8, ou moteur à turbine à gaz (200) selon la revendication 7 ou 8, dans lequel l'un ou plusieurs premiers éléments de détection de rupture (358) incluent une première thermistance configurée pour détecter une première température et l'un ou plusieurs seconds éléments de détection de rupture (363) incluent une seconde thermistance configurée pour détecter une seconde température.

10. Système ou moteur à turbine à gaz (200) selon la revendication 9, dans lequel la première température est caractéristique d'un gaz chauffé purgé dans un compresseur à haute pression du moteur à turbine à gaz (200).
